# EUROPEAN PATENT APPLICATION

(11) **EP 1 648 167 A1**
(43) Date of publication of application: **19.04.2006**
(21) Application number: 05002912.3
(22) Date of filing: 11.02.2005
(51) Int. Cl.: H04N 5/64

(54) **Television**

(30) Priority: 14.10.2004 CN 200410088124
(71) Applicant: Coretronic Corporation, Chu-Nan 350, Miao-Li County (TW)
(72) Inventor: Chueh, Chien-Tsai, Chu-Nan 350 Miao-Li County Taiwan (CN); Chuang, Chih-Kuo, Chu-Nan 350 Miao-Li County Taiwan (CN)
(74) Representative: TER MEER - STEINMEISTER & PARTNER GbR

(57) **Abstract**

A television, having a front cover (21) with a front cover aperture, a rear cover (22) assembled with the front cover by buckling, and the rear cover with a rear cover aperture (22a). The display panel is disposed between the front cover and the rear cover, having a relative front display area and a rear non-display area (23b). The front cover aperture exposes the front display area, and the rear non-display area faces the rear cover. The electrical circuit board (24) is disposed on the rear non-display area, connected with the display panel. The rear cover aperture exposes part of the electrical circuit board. The television control box is assembled on the electrical circuit board by blocking the rear cover aperture and connected with the electrical circuit board. Wherein, the television control box can be taken out from the rear cover aperture and separated from the electrical circuit board.

## Description

### FIELD OF THE INVENTION

The present invention relates to a television, and more particularly, to a television that the user can disassemble the television control box without the necessity of disassembling the front cover and the rear cover.

### BACKGROUND OF THE INVENTION

Because the flat display television has the advantage of lightness, small size, no radiation, and gentle display that cathode ray tube television does not have, the flat display television gradually substitute the market share of the cathode ray tube television, and causes the main stream of the electrical appliances product, television, enter the time of flat and planar age. In addition, according to the type of the display panel, the present planar display television includes the plasma television that has a plasma display panel, the LCD television that has a liquid crystal display panel and the organic light-emitting diode television that has an organic light-emitting diode display panel. Here the plasma television is taken for example with some figures and descriptions as follows.

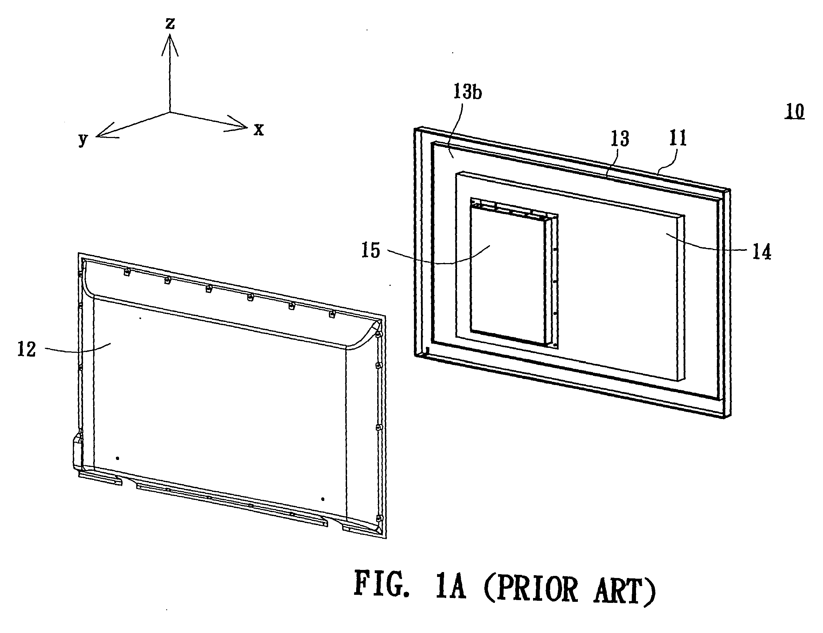

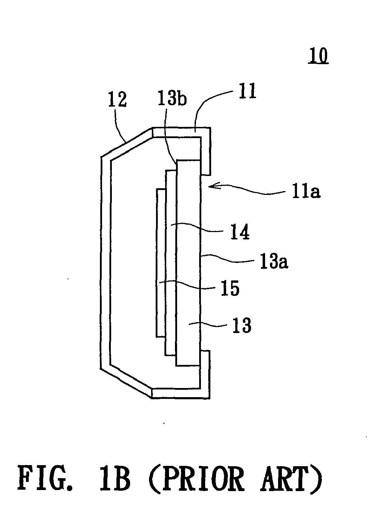

Please refer to Fig. 1A ~ Fig. 1B, Fig. 1A is the decomposed view of a conventional plasma television, and Fig. 1B is the assembly cross sectional diagram of the plasma television shown in Fig. 1A which takes the yz plane as the cross sectional plane and views from the ―x direction. In Fig. 1A ~ Fig. 1B, the plasma television 10 includes a front cover 11, a rear cover 12, a plasma display panel 13, an electrical circuit board 14 and a television control box 15. The plasma display panel 13 has the relative front display area 13a and the rear non-display area 13b. The front cover 11 has a front cover aperture 11a, and the front cover aperture 11a is used to expose the front display area 13a of the plasma display panel 13. The electrical circuit board 14 is established on the rear non-display area 13b of the plasma display panel 13 and connected with the plasma display panel 13. The television control box 15 is connected with the electrical circuit board 14 by locking on the electrical circuit board 14. The front cover 11 is locked with the rear cover 12, and there are a plasma display panel 13, an electrical circuit board 14 and a television control box 15 placed between the front cover 11 and the rear cover 12.

Because the television control box 15 is locked solidly inside the television 10, if a user wants to inspect whether the television control box 15 is damaged or not, the front cover 11 and the rear cover 12 must first be disassembled, then the television control box 10 can be examined. It takes time to disassemble the machine, and also increases the difficulty of service. As the television size grows bigger, the disassembly difficulty grows. In addition, when the user disassembles the front cover 11 and the rear cover 12, if not carefully, the electrical components on the plasma display panel 13 and the electrical circuit board 14 could be hit, causing the nonessential damage, and increasing the television 10 services costs, which is quite uneconomical.

### SUMMARY OF THE INVENTION

In view of this, an object of the present invention is to provide a television that the user can disassemble the television control box without the need to disassemble the front cover and the rear cover in advance.

To accomplish the above objective, the television according to the present invention includes a front cover, a rear cover, a display panel, an electrical circuit board and a television control box. The front cover has a front cover aperture, the rear cover is assembled with the front cover by buckling together, and the rear cover has a rear cover aperture. The display panel is set up between the front cover and the rear cover, and it has a relative front display area and a rear non-display area. The front cover aperture exposes the front display area, and the rear non-display area faces the rear cover. The electrical circuit board is setup at the rear non-display area, and connected with the display panel. The rear cover aperture exposes part of the electrical circuit board. The television control box is assembled on the electrical circuit board in the form of blocking up the rear cover aperture and then connected with the electrical circuit board. Wherein, the television control box may be taken out from the rear cover aperture and be separated from the electrical circuit board.

### BRIEF DESCRIPTION OF THE DRAWINGS

Fig. 1A is the decomposed view of a conventional plasma television.
Fig. 1B is the assembly cross-sectional view of the plasma television in Fig. 1A by taking the yz-plane as the cross-sectional plane and viewing from the ―x direction.
Fig. 2 is the decomposed view of the television in the preferred embodiment of the present invention.
Fig. 3 is the diagram of the front cover and the display panel in Fig. 2 from the y-direction.
Fig. 4 is the structural perspective view of the front cover, the rear cover, the display panel, the electrical circuit board and the supporting seat in Fig. 2.
Fig. 5 is the assembly view of the television in the preferred embodiment of the present invention.
Fig. 6 is the assembly process of the television in the preferred embodiment of the present invention.

### DETAILED DESCRIPTION OF THE PREFERRED EMBODIMENT

In order to reach the objective mentioned above, the technical method and other effects, a preferred embodiment is introduced with some figures and descriptions as follows.

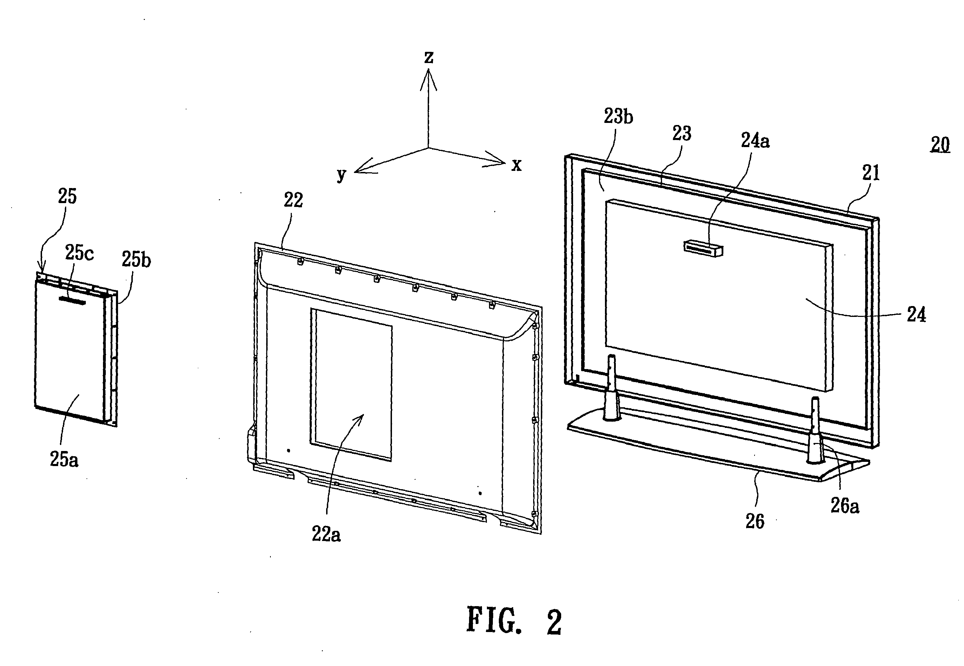

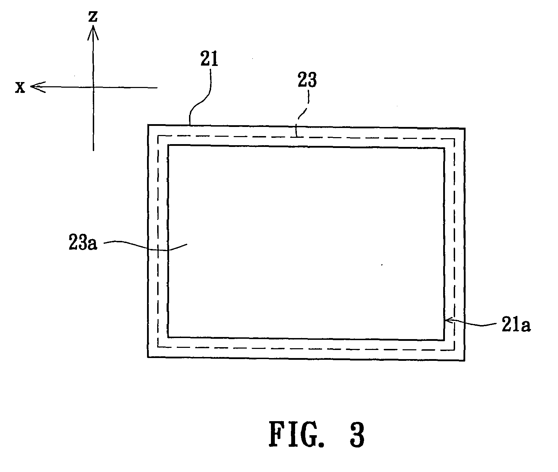

Please refer to Fig. 2; the drawing is the decomposed view of the television in the preferred embodiment of the present invention. In Fig. 2, the television 20 includes a front cover 21, a rear cover 22, a display panel 23, an electrical circuit board 24, a television control box 25 and a supporting seat 26. The rear cover 22 is assembled with the front cover 21 by buckling together along the y-axis, and the rear cover has a rear cover aperture 22a. The display panel 23 is disposed between the front cover 21 and the rear cover 22, and it has the relative front display area 23a and a rear non-display area 23b as shown in Fig. 3. In Fig. 3, the front cover 21 has a front cover aperture 21a and the front cover aperture 21a exposes the front display area 23a.

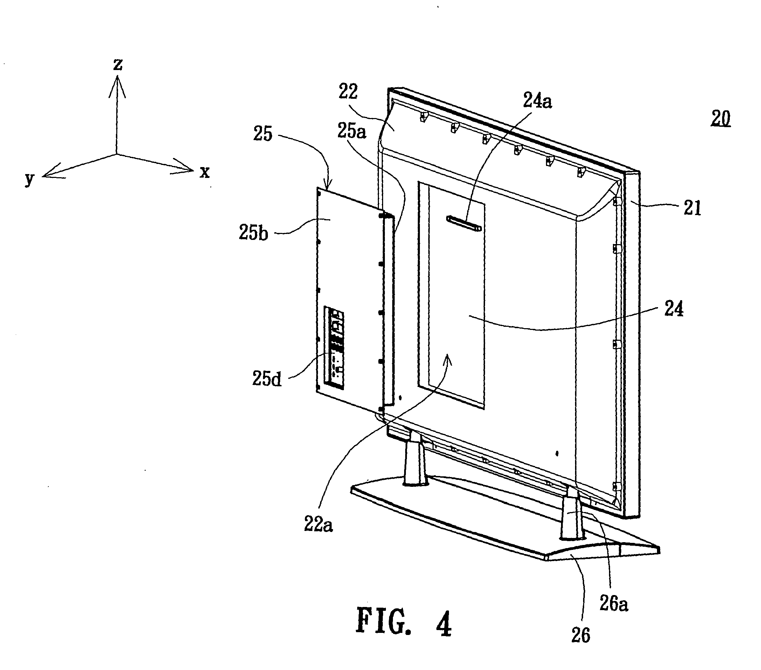

Please again refer to Fig. 2; the rear non-display area 23b faces the rear cover 22 and reversely face the front cover 21. The electrical circuit board 24 is disposed at the rear non-display area 23b, and connected with the display panel 23. In addition, the electrical circuit board 24 consists of a first connector 24a. As Fig. 4 shows, when the front cover 21 and the rear cover 22 are assembled, and the display panel 23 and the electrical circuit board 24 are disposed between them, the rear cover aperture 22a exposes part of the electrical circuit board 24 and the first connector 24a. In addition, the supporting seat 24 consists of two supporting rods 26a, and these two supporting rods are assembled with the front cover 21 or the rear cover 22 that the television 20 can be held in horizontal position by the supporting seat 26.

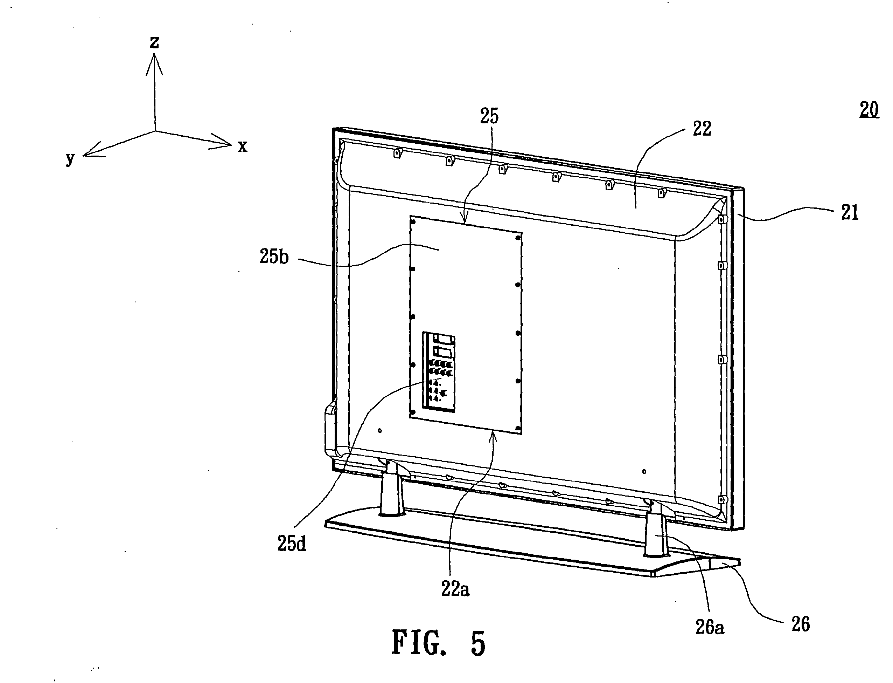

Please also refer to Fig. 2 and Fig. 4; the television control box 25 has a relative control box front 25a and a control box back 25b, a second connector 25c for connection and a terminal connection interface 25d. The second connector 25c and the terminal connection interface 25d are disposed on the control box front 25a and the control box back 25b respectively. The second connector 25c is connected with the first connector 24a through the rear cover aperture 22a along the y-axis by the method of hot plug. When the second connector 25c is connected with the first connector 24a, as Fig. 5 shows, the television control box 25 is disposed on the electrical circuit board 24 by blocking the rear cover aperture 22a. When the second connector 25c is separated from the first connector 24a as Fig. 4 shows, the television control box 25 can be taken out from the television 20 from the rear cover aperture 22a and be apart from the electrical circuit board. In Fig. 5, the terminal connection interface 25d exposes itself outside the television 20, and through an antenna or the cable line to receive at least one digital or analog television program signal. Besides, the terminal connection interface 25d is also capable of receiving the signal from the video and audio output device, like the output of analog voice signal from the television amusement, VCD player, DVD player and so on.

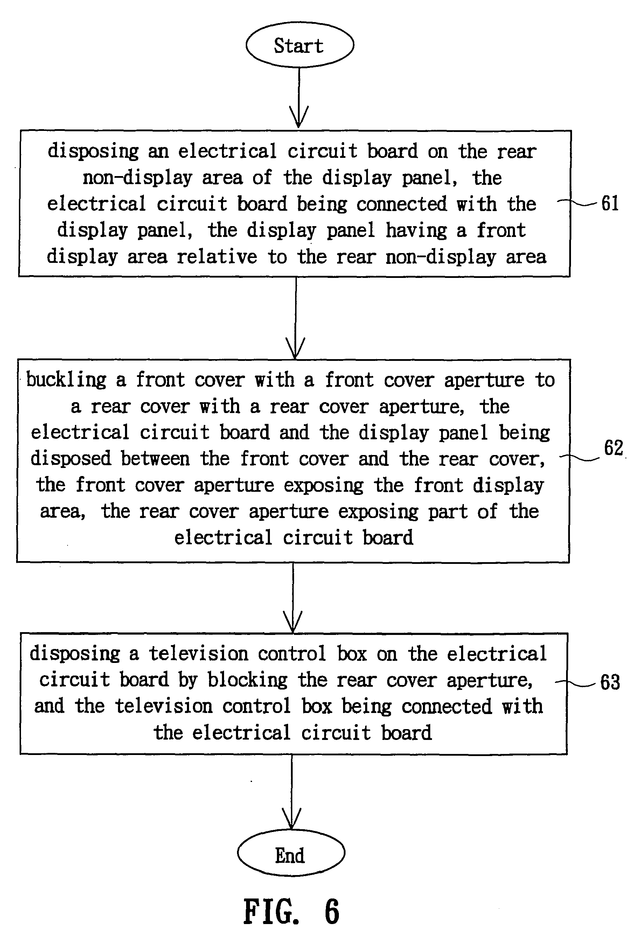

Please refer to Fig. 6; the drawing is the assembly flow chart of the television in the preferred embodiment of the present invention. Please also refer to Fig. 2 - Fig. 5, first of all, in step 61, the electrical circuit board 24 is disposed on the rear non-display area 23b of the display panel 23. The electrical circuit board 24 is connected with the display panel 23 and the display panel 23 consists of a front display area 23a relative to the rear non-display area 23b. In step 62, a front cover 21 with a front cover aperture 21a is connected with a rear cover 22 with a rear cover aperture 22a, and the electrical circuit board 24 and the display panel 23 are disposed between them. The front cover aperture 21a exposes the front display area 23a, and the rear cover aperture 22a exposes part of the electrical circuit board 24. Then, in step 63, the television control box 25 is assembled with the electrical circuit board 24 by blocking the rear cover aperture 22a to be disposed on the electrical circuit board 24.

In the preferred embodiment, the rear cover 22 has the rear cover aperture 22a for the user to inspect whether the television control box 25 is damaged and decide if it needs service by assembling and disassembling the television control box 25 without the need of disassembling the front cover 21 and rear cover 22 in advance. Thus, it can save the service man-hours, as well as reduce the difficulty of service. In addition, because the user does not need to disassemble the front cover 21 and the rear cover 22, it prevents the user from hitting the electrical components of the display panel 23 and the electrical circuit board 24 inside the television 20 in order to prevent unnecessary damage and reduce the service cost of the television 20. In addition, if the television 20 is exported in the way that the television control box 25 is separated from the electrical circuit board 24 to domestic or foreign places, it can reduce the transportation cost and save lots of taxes. Moreover, the user can enjoy the DIY pleasure of assembling the television 20.

However, one skilled in the art also can understand that the technique of the preferred embodiment is certainly not limited here. For example, the display panel 22 can be a plasma display panel, a liquid crystal display panel or an organic light-emitting diode display panel. In addition, the size of the television control box 25 is approximately equal to the rear cover aperture 22a. When the television control box 25 is assembled with the electrical circuit board 24, the television control box 25 can be assembled with the rear cover by buckling, wedging, or locking. For instance, the user can fix the television control box 25 on the rear cover 22 by a screw, a hole plug or filling a nail that the television control box 25 blocks the rear cover aperture 22a in order to achieve the goal of fast assembly and convenient disassembly. Under the presupposition that the television control box 25 can be connected with the electrical circuit board 24 through the rear cover aperture 22a, the television control box 25 can be connected with the electrical circuit board 23 through any other electrically connecting types and is not limited in the method of hot plug and unplug. Under the assumption that the electrical circuit board 24 consists of the electrical circuit designs of a display apparatus and a television, when the television control box 25 is separated from the electrical circuit board, the television without television control box 25 is regarded as a display apparatus, and it can be connected with a computer and be the monitor of the connected computer.

The television in the preferred embodiment of the present invention discloses the design that the television control box can be assembled or disassembled with the electrical circuit board from the rear cover aperture. This can provide the user a way to assemble or take off the television control box without disassemble the front cover and the rear cover, and then the user may inspect the damage of the television control box and decide whether it needs service. Thus, it can save the maintenance man-hours, as well as reduces the difficulty for service. In addition, because the user does not need to disassemble the front cover and the rear cover, it prevents the user from hitting the television interior display panel and electrical components of the electrical circuit board, and prevents nonessential damage and reduces the service cost. Moreover, if the television is exported in the way that the television control box is separated from the electrical circuit board to domestic or foreign places, it can reduce the transportation cost and save lots of taxes. Moreover, the user can enjoy the DIY (Do it yourself) pleasure of assembling the television.

Although the invention has been described in detail herein with reference to its preferred embodiment, it is to be understood that this description is by way of example only, and is not to be interpreted in a limiting sense. It is to be further understood that numerous changes in the details of the embodiments of the invention, and additional embodiments of the invention, will be apparent, and may be made by, persons of ordinary skill in the art having reference to this description. It is considered that such changes and additional embodiments are within the spirit and true scope of the invention as claimed below.

## Claims

1. A television, comprising:
a front cover, having a front cover aperture;
a rear cover, being assembled with the front cover by buckling with the front cover, the rear cover having a rear cover aperture;
a display panel, being disposed between the front cover and the rear cover, having a relative front display area and a rear non-display area, the front cover aperture exposing the front display area, the rear non-display area facing the rear cover;
an electrical circuit board, being disposed on the rear non-display area, connected with the display panel, the rear cover aperture exposing part of the electrical circuit board; and
a television control box, being assembled on the electrical circuit board by blocking the rear cover aperture, connected with the electrical circuit board;
wherein the television control box is taken out from the rear cover aperture, and separated from the electrical circuit board.

2. The television of claim 1, wherein the electrical circuit board has a first connector, the rear cover aperture exposing the first connector, the television control box having a second connector, the second connector being connected with the first connector by the method of hot plug and unplug through the rear cover aperture.

3. The television of claim 1, wherein when the television control box is connected with the electrical circuit board, the television control box is buckled, wedged, or locked with the rear cover.

4. The television of claim 1, wherein the size of the television control box is approximately equal to the rear cover aperture.

5. The television of claim 1, wherein the display panel is a plasma display panel, a liquid crystal display panel or an organic light-emitting diode display panel.

6. The television of claim 1, wherein when the television is disassembled with the electrical circuit board, the television without the television control box is regarded as a display apparatus.

7. A television, comprising:
a front cover, having a front cover aperture;
a rear cover, being assembled with the front cover by buckling with the front cover, the rear cover having a rear cover aperture;
a display panel, being disposed between the front cover and the rear cover, having a relative front display area and a rear non-display area, the front cover aperture exposing on the front display area, the rear non-display area facing the rear cover;
an electrical circuit board, being disposed on the rear non-display area and connected with the display panel, the rear cover aperture exposing part of the electrical circuit board and the first connector; and
a television control box, having a second connector, the second connector being connected with the first connector by the method of hot plug and unplug through the rear cover aperture;
when the second connector is connected with the first connector, the television control box is disposed on the electrical circuit board by blocking the rear cover aperture;
when the second connector is disassembled from the first connector, the television control box is taken out from the rear cover aperture and separated from the electrical circuit board.

8. The television of claim 7, wherein when the television control box is connected with the electrical circuit board, the television control box is buckled, wedged, or locked with the rear cover.

9. The television of claim 7, wherein the size of the television control box is approximately equal to the rear cover aperture.

10. A television assembly method, comprising:
disposing an electrical circuit board on the rear non-display area of the display panel, the electrical circuit board being connected with the display panel, the display panel having a front display area relative to the rear non-display area;
buckling a front cover with a front cover aperture to a rear cover with a rear cover aperture, the electrical circuit board and the display panel being disposed between the front cover and the rear cover, the front cover aperture exposing the front display area, the rear cover aperture exposing part of the electrical circuit board, and
disposing a television control box on the electrical circuit board by blocking the rear cover aperture, and the television control box being connected with the electrical circuit board.

11. The method of claim 10, wherein the electrical circuit board having a first connector, the rear cover aperture exposing the first connector, the television control box having a second connector connected with the first connector by the method of hot plug and unplug through the rear cover aperture;
when the second connector is connected with the first connector, the television control box is setup on the electrical circuit board; and
when the second connector is disassembled from the first connector, the television control box is taken out to be disassembled from the electrical circuit board.
